# EUROPEAN PATENT APPLICATION

(11) **EP 3 366 901 A1**
(43) Date of publication of application: **29.08.2018**
(21) Application number: 18157276.9
(22) Date of filing: 16.02.2018
(51) Int. Cl.: F02B 37/16, F16K 1/00, F16K 27/02, F02B 37/12

(54) **COMPRESSOR RECIRCULATION VALVE WITH VALVE SEAT STRUCTURE FOR SUPPRESSING NOISE UPON OPENING OF VALVE**

(30) Priority: 22.02.2017 US 201715438758
(71) Applicant: Honeywell International Inc., Morris Plains, NJ 07950 (US)
(72) Inventor: LI, Junjie, Morris Plains, NJ New Jersey 07950 (US); ZHANG, Xiaoyang, Morris Plains, NJ New Jersey 07950 (US); LIU, Gaofeng, Morris Plains, NJ New Jersey 07950 (US); WANG, Haibin, Morris Plains, NJ New Jersey 07950 (US)
(74) Representative: Houghton, Mark Phillip

(57) **Abstract**

A compressor recirculation valve having features for mitigating the "rush" noise caused when the valve opens and compressed recirculation air rushes through the valve into the compressor inlet. The features for mitigating rush noise include a generally annular wall that projects from the valve seat and surrounds the valve member. The radially inner surface of the wall can be conical and can include radially inwardly projecting teeth between which are V-shaped grooves.

## Description

### BACKGROUND OF THE INVENTION

This application relates generally to turbochargers for internal combustion engines, and more particularly relates to recirculation valves used with the turbocharger compressor for allowing some portion of the already-compressed air from the compressor discharge to be recirculated back to the compressor inlet.

Using a recirculation valve (RCV) with a turbocharger compressor to recirculate a portion of the already-compressed air back to the compressor inlet is a generally known strategy for delaying the onset of surge of the compressor to a lower flow rate at a given pressure ratio, or to a higher pressure ratio at a given flow rate. One drawback of the RCV, however, is that it tends to be a source of aerodynamically induced noise.

### SUMMARY OF THE DISCLOSURE

An objective of the present invention is to at least partially alleviate the problem of RCV noise. A particular noise issue with RCVs is a "rush" noise that occurs when the engine is operating at relatively high RPM and the driver suddenly releases the accelerator pedal and the RCV opens. Air rushing from the compressor discharge pipe through the RCV produces a "rush" noise that is distinctly audible to the vehicle occupants. The present disclosure describes a compressor recirculation valve having features for suppressing the "rush" noise.

In accordance with an embodiment of the invention, a recirculation valve for a turbocharger compressor comprises:
a valve housing defining an axial flow passage for compressed recirculation air extending along a direction defined by an axis of the recirculation valve, a generally annular valve seat encircling the axis, an annular cavity surrounding the axial flow passage, the annular cavity being in fluid communication with the axial flow passage, and a transverse flow passage in fluid communication with the annular cavity;
a valve member disposed in the axial flow passage and linearly movable in an axial direction along the axis between a closed position wherein an end of the valve member contacts the valve seat, and an open position wherein the end of the valve member is axially spaced from the valve seat; and
a generally annular wall projecting from the valve seat generally in the axial direction along which the valve member moves toward the open position, the generally annular wall surrounding the valve member, the generally annular wall having a height in said axial direction measured between a base of the generally annular wall and an upper edge of the generally annular wall.

In accordance with an embodiment of the invention, the generally annular wall is disposed such that when the valve member begins to move from the closed position to the open position, the compressed recirculation air first flows radially outwardly following the valve seat, and then is turned by the generally annular wall to flow generally axially and past the upper edge of the generally annular wall before reaching and flowing radially outwardly through the transverse flow passage.

In one embodiment, a radially inner surface of the generally annular wall is conical, having a cone half angle α, a diameter of said radially inner surface at the upper edge being larger than a diameter of said radially inner surface at the base. Advantageously, the angle α can be greater than 0° but not exceeding about 45°.

In one embodiment, said radially inner surface of the generally annular wall at its base is spaced radially outward of a radially outer surface of the valve member by an amount b, wherein b is between 3% and 20% of a radius of said radially outer surface of the valve member.

In another embodiment, a radially inner surface of the generally annular wall defines a plurality of generally annular teeth that are axially spaced apart along said axial direction, the teeth projecting radially inwardly toward the valve member. Each tooth defines a radially innermost surface, and in accordance with one embodiment the radially innermost surfaces of the teeth all lie on a conical surface having a cone half angle α, said conical surface increasing in diameter along said axial direction. The angle α can be greater than 0° but not exceeding about 45°.

In a particular embodiment, a groove is defined between each pair of axially adjacent teeth, the groove having a V-shape on an axial cross-section through the recirculation valve. Each groove can have a V-angle β that is between 20° and 50°.

In accordance with one embodiment, said radially innermost surface of the tooth closest to the valve seat is spaced radially outward of a radially outer surface of the valve member by an amount b, wherein b is between 3% and 20% of a radius of said radially outer surface of the valve member.

The valve housing can define a chamber for receiving compressed air to be recirculated, the chamber being connected to the axial flow passage. In one embodiment, the valve housing further defines a volute for the compressor.

### BRIEF DESCRIPTION OF THE DRAWINGS

Having described the present disclosure in general terms, reference will now be made to the accompanying drawing(s), which are not necessarily drawn to scale, and wherein:
FIG. 1 is a perspective view of a housing for a turbocharger compressor and recirculation valve (RCV) in accordance with one embodiment of the invention;
FIG. 2 is an elevation of the housing of FIG. 1;
FIG. 3 is a cross-sectional view along line 3-3 in FIG. 2;
FIG. 4 is an enlarged portion of FIG. 3, wherein the recirculation valve is in the closed position; and
FIG. 5 is a view similar to FIG. 4, but showing a second embodiment of the invention.

### DETAILED DESCRIPTION OF THE DRAWINGS

The present disclosure will now be described in fuller detail with reference to the above-described drawings, which depict some but not all embodiments of the invention(s) to which the present disclosure pertains. These inventions may be embodied in various forms, including forms not expressly described herein, and should not be construed as limited to the particular exemplary embodiments described herein. In the following description, like numbers refer to like elements throughout.

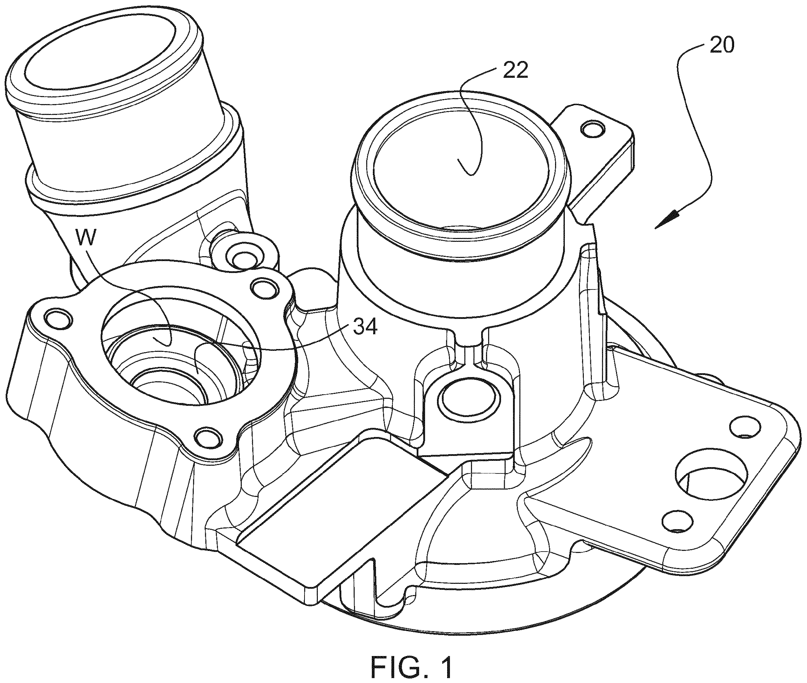

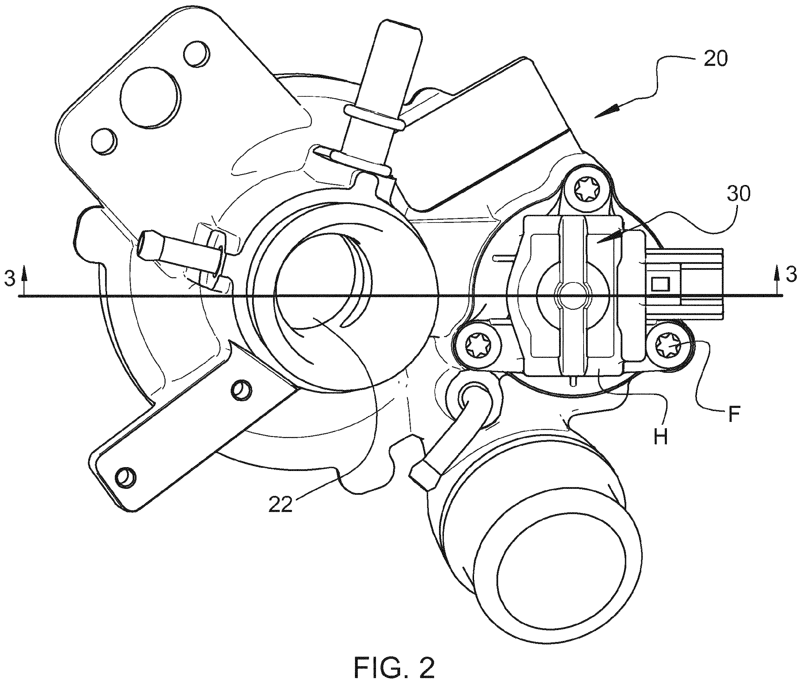

FIGS. 1 through 3 depict a housing **20** for use in a turbocharger (not shown) having a compressor recirculation valve (RCV) **30.** In FIG. 1, the internal components of the RCV have been removed to allow a valve seat defined by the housing to be seen. In the illustrated embodiment, the housing **20** defines features for the compressor of the turbocharger, as well as features for the RCV. Thus, the housing defines an inlet **22** for the compressor, through which air is led toward a compressor wheel (not shown) disposed within the housing. The housing defines a diffuser **24** through which air that has been compressed by the compressor wheel is led radially outwardly, and a volute **26** that receives the diffused compressed air. The compressed air is supplied from the volute into an engine intake manifold (not shown) of an internal combustion engine (not shown). The housing defines a passage **28** that connects the volute **26** to an inlet of the RCV so that compressed air is supplied to the RCV. The housing also defines a transverse flow passage **29** that connects an outlet of the RCV to the inlet **22** of the compressor upstream of the compressor wheel (not shown), so that the RCV can recirculate air from the volute **26** back to the compressor inlet.

The RCV **30** includes an axial flow passage **32** defined by the valve housing **20.** The passage **32** extends along a direction defined by an axis **A** of the recirculation valve. The valve housing further defines a generally annular valve seat **34** encircling the axis, and an annular cavity **36** surrounding the axial flow passage **32,** the annular cavity being in fluid communication with the axial flow passage.

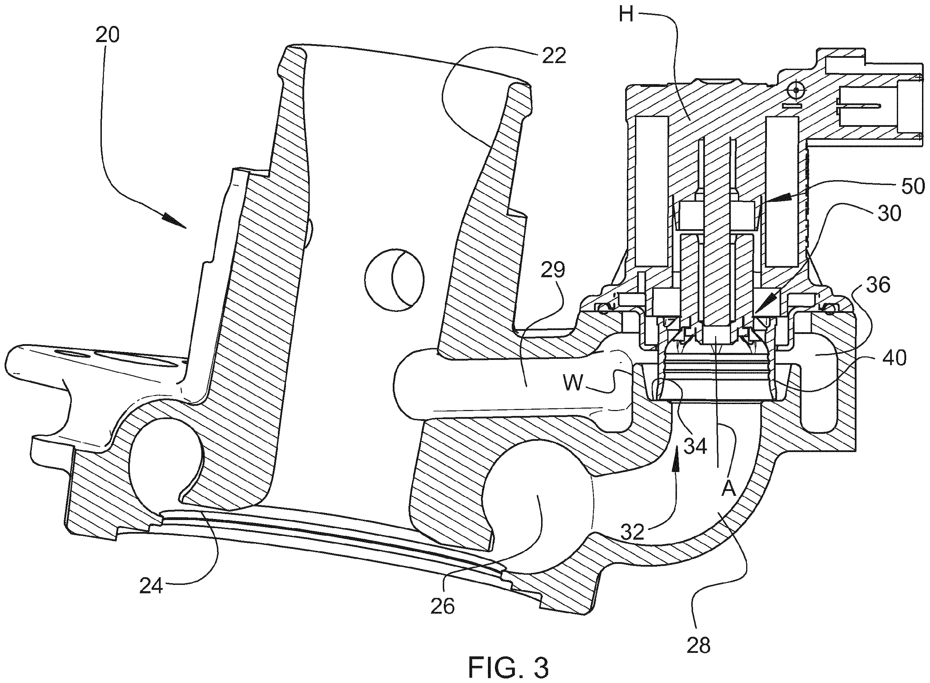

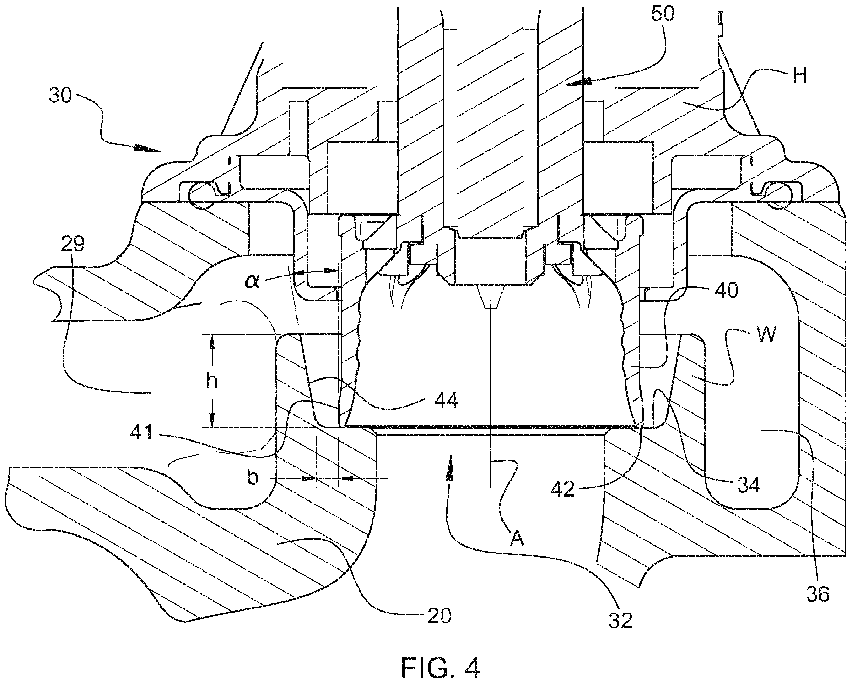

The RCV includes a valve member **40** disposed in the axial flow passage **32.** The valve member is linearly movable along the axis **A** between a closed position (FIGS. 3 and 4) wherein an end **42** of the valve member contacts the valve seat **34,** and an open position (not shown) wherein the end of the valve member is axially spaced from the valve seat. The RCV includes an actuator **50** for effecting the movement of the valve member. Various types of actuators can be used in the practice of the invention. For instance, pneumatic actuation or electrical actuation can be employed, as two non-limiting examples.

The construction of the housing for the valve actuator can take various forms in the practice of the invention. In the illustrated embodiment, a separate actuator housing **H** contains the actuator that actuates the valve member **30,** and the actuator housing **H** is fastened to the valve housing **20** by fasteners **F.** Alternatively, the actuator housing and valve housing can be formed together integrally.

The RCV **30** includes features for suppressing the "rush" noise that is created when the RCV opens to allow compressed air to flow from the axial passage **32** through a space that forms between the end of the valve member **40** and the valve seat **34** when the valve member is actuated to move along the axis **A,** the air then traveling into the transverse flow passage **29** and back into the inlet **22** of the compressor. As previously noted, this rush of air past the end of the valve member creates a "rush" noise that is distinctly audible to occupants of the vehicle in which the turbocharger is installed. In accordance with the invention, the "rush" noise is mitigated by providing a generally annular wall **W** projecting from the valve seat **34** generally in the axial direction defined by the axis **A** along which the valve member **40** moves toward the open position. The generally annular wall surrounds the valve member **40.** The generally annular wall has a height h in said axial direction, measured between a base of the generally annular wall and an upper edge of the generally annular wall, as best seen in FIG. 4.

In one embodiment as illustrated, the generally annular wall **W** is disposed such that when the valve member **40** begins to move from the closed position (FIG. 4) to the open position (moving upward in FIG. 4), the compressed recirculation air first flows radially outwardly following the valve seat **34,** and then is turned by the generally annular wall **W** to flow generally axially and past the upper edge of the generally annular wall before reaching and flowing radially outwardly through the transverse flow passage **29.** By the provision of the generally annular wall **W,** the direction and pressure level of the air released through the RCV are altered so as to mitigate the "rush" noise.

In accordance with the illustrated embodiment of FIG. 4, a radially inner surface **44** of the generally annular wall **W** is conical, having a cone half angle **α,** a diameter of said radially inner surface at the upper edge of the wall being larger than a diameter of said radially inner surface at the base of the wall. Advantageously, **α** can be greater than 0° but not exceeding about 45°.

In one embodiment, said radially inner surface **44** at the base is spaced radially outward of a radially outer surface **41** of the valve member by an amount **b,** wherein **b** is between 3% and 20% of a radius of said radially outer surface of the valve member.

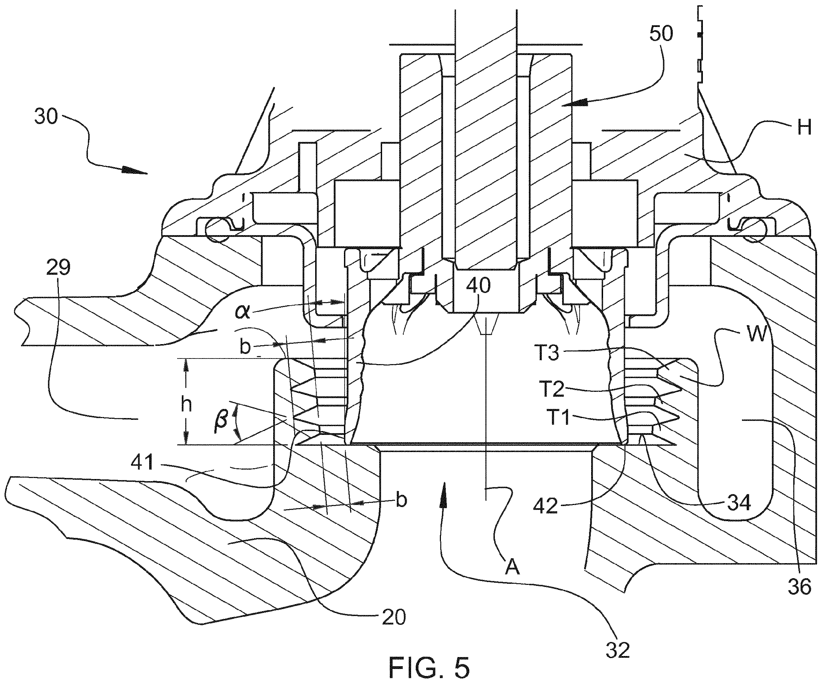

FIG. 5 illustrates a second embodiment of the invention. In accordance with this embodiment, a radially inner surface of the generally annular wall **W** defines a plurality of generally annular teeth **T1**, **T2, T3**, that are axially spaced apart along said axial direction, the teeth projecting radially inwardly toward the valve member **40.** Each tooth defines a radially innermost surface, and the radially innermost surfaces of the teeth all lie on a conical surface having a cone half angle **α**, said conical surface increasing in diameter along said axial direction. Advantageously, the angle **α** can be greater than 0° but not exceeding about 45°.

A groove is defined between each pair of axially adjacent teeth, the groove having a V-shape on an axial cross-section through the recirculation valve. In one embodiment, the grooves have a V-angle β that is between 20° and 50°.

In accordance with one embodiment, the radially innermost surface of the tooth **T1** closest to the valve seat **34** is spaced radially outward of the radially outer surface **41** of the valve member by an amount **b,** wherein **b** is between 3% and 20% of a radius of said radially outer surface **41** of the valve member. It is also advantageous for the radial depth of the grooves to be equal to **b.**

Persons skilled in the art, on the basis of the present disclosure, will recognize that modifications and other embodiments of the inventions described herein can be made without departing from the inventive concepts described herein. For example, in the illustrated embodiment, the valve housing defining the axial passage **32** and valve seat **34** is formed integrally with the compressor housing (i.e., a single housing member defines the compressor features such as the diffuser **24** and volute **26,** and also defines the valve features such as the valve passage **32** and valve seat **34**). Alternatively, however, the valve housing can be a separate component that does not define any of the compressor features.

Additionally, while the disclosed embodiments have been described with reference to certain geometric parameters such as cone half angles **α**, V-angles **β**, and radial spacing distances **b,** and exemplary quantitative values have been described for such parameters, the invention is not limited to any particular values for these parameters; rather, the cited values are examples only.

Specific terms used herein are employed for explanatory purposes rather than purposes of limitation. Accordingly, the inventions are not to be limited to the specific embodiments disclosed, and modifications and other embodiments are intended to be included within the scope of the appended claims. Other variations that do not depart from the described inventive concept are also included within the scope of the appended claims.

## Claims

1. A recirculation valve for a turbocharger compressor, comprising:
a valve housing defining:
an axial flow passage for compressed recirculation air extending along a direction defined by an axis of the recirculation valve;
a generally annular valve seat encircling the axis;
an annular cavity surrounding the axial flow passage, the annular cavity being in fluid communication with the axial flow passage; and
a transverse flow passage in fluid communication with the annular cavity;
a valve member disposed in the axial flow passage and linearly movable in an axial direction along the axis between a closed position wherein an end of the valve member contacts the valve seat, and an open position wherein the end of the valve member is axially spaced from the valve seat; and
a generally annular wall projecting from the valve seat generally in the axial direction along which the valve member moves toward the open position, the generally annular wall surrounding the valve member, the generally annular wall having a height in said axial direction measured between a base of the generally annular wall and an upper edge of the generally annular wall;
wherein the generally annular wall is disposed such that when the valve member begins to move from the closed position to the open position, the compressed recirculation air first flows radially outwardly following the valve seat, and then is turned by the generally annular wall to flow generally axially and past the upper edge of the generally annular wall before reaching and flowing radially outwardly through the transverse flow passage.

2. The turbocharger of claim 1, wherein a radially inner surface of the generally annular wall is conical, having a cone half angle α, a diameter of said radially inner surface at the upper edge being larger than a diameter of said radially inner surface at the base.

3. The turbocharger of claim 2, wherein α is greater than 0° but not exceeding 45°.

4. The turbocharger of claim 2, wherein said radially inner surface at the base is spaced radially outward of a radially outer surface of the valve member by an amount *b,* wherein *b* is between 3% and 20% of a radius of said radially outer surface of the valve member.

5. The turbocharger of claim 1, wherein a radially inner surface of the generally annular wall defines a plurality of generally annular teeth that are axially spaced apart along said axial direction, the teeth projecting radially inwardly toward the valve member.

6. The turbocharger of claim 5, wherein each tooth defines a radially innermost surface, and wherein the radially innermost surfaces of the teeth all lie on a conical surface having a cone half angle α, said conical surface increasing in diameter along said axial direction.

7. The turbocharger of claim 6, wherein α is greater than 0° and 45°.

8. The turbocharger of claim 6, wherein a groove is defined between each pair of axially adjacent teeth, the groove having a V-shape on an axial cross-section through the recirculation valve.

9. The turbocharger of claim 8, wherein each groove has a V-angle β that is between 20° and 50°.

10. The turbocharger of claim 8, wherein said radially innermost surface of the tooth closest to the valve seat is spaced radially outward of a radially outer surface of the valve member by an amount *b,* wherein *b* is between 3% and 20% of a radius of said radially outer surface of the valve member.

11. The turbocharger of claim 10, wherein a radial depth of the grooves is equal to *b.*
